# EUROPEAN PATENT SPECIFICATION

(11) **EP 1 466 866 B1**
(45) Date of publication and mention of the grant of the patent: **16.04.2008**
(21) Application number: 02798368.3
(22) Date of filing: 29.11.2002
(51) Int. Cl.: C01B 39/48

(54) **POROUS CRYSTALLINE MATERIAL (ITQ-21) AND THE METHOD OF OBTAINING SAME IN THE ABSENCE OF FLUORIDE IONS**
PORÖSES KRISTALLINES MATERIAL (ITQ-21) UND HERSTELLUNGSVERFAHREN DAFÜR IN ABWESENHEIT VON FLUORIDIONEN
MATERIAU CRISTALLIN POREUX (ITQ-21) ET SON PROCEDE D'OBTENTION EN L'ABSENCE D'IONS FLUORURE

(30) Priority: 30.11.2001 ES 200102753
(43) Date of publication of application: 13.10.2004
(73) Proprietor: CONSEJO SUPERIOR DE INVESTIGACIONES CIENTIFICAS, 28006 Madrid (ES); UNIVERSIDAD POLITECNICA DE VALENCIA, 46022 Valencia (ES)
(72) Inventor: CORMA CANOS, Avelino, Inst. de Tenologia Quimica, C/los Naranjos, S/N 46022 Valencia (ES); DIAZ CARBANAS, Maria, Inst. de Tecnologia Quimica, C/los Naranjos, S/N 46022 Valencia (ES); REY GARCIA, Fernando, Inst. de Tecnologia Quimica, C/los Naranjos, S/N 46022 Valencia (ES)
(74) Representative: Ungria Lopez, Javier
(86) International application number: PCT/ES2002/000568
(87) International publication number: WO 2003/046264

(56) References cited:
- WO-A-02/092511
- US-A- 5 271 922
- US-A- 6 043 179
- BARRETT P.A.: 'Synthesis in fluoride and hydroxide media and structure of the extra-large pore pure silica zeolite CIT-S' JOURNAL OF THE CHEMICAL SOCIETY, FARADAY TRANSACTIONS vol. 94, no. 16, 1998, pages 2475 - 2481, XP000776076
- LOBO R.F. ET AL: 'Synthesis and characterization of pure-silica and boron-substituted SSZ-24 using N(16) methylsparteinium bromide as structure-directing agent' MICROPOROUS MATERIALS vol. 3, 1994, pages 61 - 69, XP000783874
- TSUJI K. ET AL: 'High-silica molecular sieve syntheses using the sparteine related compounds as structure-directing agents' MICROPOROUS AND MESOPOROUS MATERIALS vol. 28, 1999, pages 461 - 469, XP004165647

## Description

### TECHNICAL FIELD OF THE INVENTION

The present invention belongs to the field of porous crystalline materials and particularly to zeolitic materials. More particularly, the invention fits in the sector of zeolitic materials useful as catalysts or components of catalysts in processes of conversion of feedstock formed by organic compounds, such as catalytic cracking processes of hydrocarbons, catalytic hydrocracking of hydrocarbons, alkylation of aromatic olefins and in esterification processes, alkylation of aromatics with olefins and in esterification processes, acylation, reaction of aniline with formaldehyde in its acid form and/or exchanged with suitable cations.

### PRIOR ART

Zeolites are porous crystalline aluminosilicates that have found important uses such as catalysts, adsorbing agents and ionic exchangers. Many of these zeolitic materials have well defined structures that form channels and cavities inside of a uniform size and shape that permit adsorption of certain molecules, whereas they prevent from passing inside the crystal other molecules that are too big from spreading through the pores. This characteristic gives these materials properties of molecular sieve. These molecular sieves can include Si and other elements of the group IIIA of the periodic table in the lattice, all of them tetrahedrally coordinated. The tetrahedron are bonded by their vertexes by oxygen atoms forming a three-dimensional lattice. The negative charge generated by the elements of the IIIA group tetrahedrally coordinated in lattice positions is compensated by the presence of cations, such as for example, alkaline or alkaline earth cations, in the crystal. A type of cation may be totally or partially exchanged by another type of cation by means of ionic exchange techniques, being thus possible to vary the properties of a given silicate by selecting the desired cations.

Many zeolites have been synthesized in the presence of an organic molecule that acts as a structure directing agent (SDA). The organic molecules that act as structure directing agents (SDA) generally contain nitrogen in their composition and can give rise to organic cations stable in the reaction medium.

The mobilization of silica can be carried out in the presence of OH⁻ groups and a basic medium, that can be introduced as a hydroxide of the SDA itself, such as for example, tetrapropylammonium hydroxide in the case of zeolite ZSM-5. The fluoride ions can also act as mobilizing agents of silica in the synthesis of zeolites, such as is described, for example, in patent application EP-A-337479 in accordance with which HF is used in H₂O at a low pH as a mobilizing agent of the silica for the synthesis of ZSM-5. However, the use of fluoride ions in the synthesis is less desired from an industrial point of view than the use of OH⁻, given that the presence of fluoride ions requires the use of special materials in the synthesis equipment, as well as a specific treatment with waste waters and gases.

### DESCRIPTION OF THE INVENTION

The present invention refers to a microporous crystalline material (hereinafter also called ITQ-21) and the process for obtaining the same in a basic medium, in the absence of added fluoride. This new material has, in the calcined form as well as in the uncalcined synthesized form, an X-ray diffraction pattern that is different from that of other known zeolitic materials. The most important diffraction lines of the material for its calcined are shown in Table 1.

**TABLE 1**

| 2θ (°) ^{(a)} | Relative intensity |
|---|---|
| 6.4 | VS |
| 11.2 | M |
| 18.4 | W |
| 19.6 | W |
| 21.6 | M |
| 26.3 | M |
| 29.3 | W |

| | |
|---|---|
| ^{(a)} ±0.2 | |

The crystalline material of this invention named ITQ-21 has a molar composition in its calcined and anhydrous state represented by the equation:

x X₂O₃ : y YO₂ : z ZO₂

wherein
X is a trivalent element such as Al, B, Fe, In, Ga, Cr or combinations thereof,
Y is a tetravalent element such as Si, Ti, Sn or combinations thereof, although Si is preferred,
and Z is Ge;
wherein the value of (y+z)/x is less than 5, and can be comprised between 7 and ∞ and the value y/z is at least 1.

From the values given, it is clearly inferred that the crystalline material ITQ-21 can be synthesized in the absence of added trivalent elements.

In turn, the most important diffraction lines for the uncalcined form of the material are the ones given in table 2.

**TABLE 2**

| | |
|---|---|
| 2θ(°) ^{(a)} | Relative intensity |
| 6.5 | VS |
| 11.5 | M |
| 18.5 | S |
| 19.6 | VS |
| 21.8 | S |
| 26.2 | VS |
| 29.3 | M |

| | |
|---|---|
| ^{(a)} ±0.2 | |

These diffractograms were obtained with a Philips X'Pert diffractometer equipped with a graphite monochromator and an automatic divergence slot using K_{α} radiation of copper. The diffraction data were registered by a passing of 2θ of 0.01° wherein θ is the Bragg angle and a count time of 10 seconds per passing. The relative intensity of the lines is calculated as the percentage regarding the most intense peak, and a percentage of 80-100 is considered very strong (vs). a percentage of 60-80 is considered strong (s), a percentage of 40-60 is considered medium, a percentage of 20-40 is considered weak (w) and a percentage of 0-20 is considered very weak (vw).

The compensation cations in the material in its uncalcined form, or after thermal treatment, can be exchanged, in the case of being present, by other metallic ions, H⁺ and H⁺ precursors such as for example NH⁺₄. Among the cations that can be introduced by ionic exchange, those that can have a positive role in the activity of the material as a catalyst are preferred, and more specifically, cations such as H^{+,} rare earth cations and metals of the group VIII, as well as of group IIA. IIIA, IVA, Va, IB, IIB, IIIB, IVB, VB, VIIB of the periodic chart of elements are preferred.

For the purpose of preparing catalysts, the crystalline material of the present invention can be combined closely with hydrogenating-dehydrogenating agents such as platinum, palladium, nickel, rhenium, cobalt, tungsten, molybdenum, vanadium, chrome, manganese, iron. The introduction of these elements can be carried out in the crystallization step, by exchange (if appropriate), and/or by impregnation or by physical mixing. These elements can be introduced in their cationic form and/or as of salts or other compounds which by decomposition produce the metallic component or oxide in its suitable catalytic form.

The material ITQ-21 can be prepared in a basic medium and in the absence of added fluoride ions, from a reaction mixture that contains H₂O, optionally an oxide or a source of the trivalent element X, such as for example Al and/or B, an oxide or source of the element or tetravalent elements Y, such as for example Si; a source of Ge, such as for example GeO₂ and an organic structure directing agent (R) generally a salt of N(16)-methylsparteinium, preferably the hydroxide.

The composition of the reaction mixture has the following composition in terms of molar ratios of oxides:

| **Reagents** | **Useful** | **Preferred** |
|---|---|---|
| (YO₂+ZO₂)/X₂O₃ | higher than 5 | higher than 7 |
| H₂O/(YO₂+ZO₂) | 1-50 | 2-30 |
| R/(YO₂+ZO₂) | 0.1-3.0 | 0.1-1.0 |
| OH⁻/(YO₂+ZO₂) | 0.1-3.0 | 0.1-1.0 |
| YO₂+ZO₂ | higher than 1 | higher than 2 |

Crystallization of the material ITQ-21 can be carried out statically or with stirring, in autoclaves at a temperature between 80 and 200°C, at sufficient times to achieve crystallization, for example, between 12 hours and 30 days.

When the crystallization step ends, the ITQ-21 crystals are separated from the mother liquors and are recovered. It should be taken into account that the components of the synthesis mixture can come from different sources and depending thereon, crystallization times and conditions can be varied. For the purpose of facilitating synthesis, material ITQ-21 crystals can be added as seeds to the synthesis mixture, in amounts up to 15% by weight with respect to the total oxides. These can be added before or during crystallization of the material ITQ-21.

The organic agent can be eliminated, for example by extraction and/or by thermal treatment heating at a temperature above 250°C for a period of time between 2 minutes and 25 hours.

The material of the present invention can be made into pellets in accordance with known techniques, and can be used as a component of catalysts of catalytic cracking of hydrocarbons, catalytic hydrocracking of hydrocarbons, alkylation of aromatics with olefins and in processes of esterification, acylation, aniline reaction with formaldehyde in its acid form and/or exchanged with suitable cations.

### EMBODIMENTS OF THE INVENTION

Several examples that illustrate aspects of ways of carrying out the invention will be described hereinafter.

### EXAMPLES

### Example 1.- Preparation of N(16)-methylsparteinium hydroxide.

20.25 g of (-)-sparteine are mixed with 100 ml of acetone. 17.58 g of methyl iodide are added, drop by drop, to this mixture while the mixture is stirred. After 24 hours, a cream color precipitate appears. 200 ml of diethyl ether are added to the reaction mixture, which is filtered and the solid obtained is vacuum dried. The product is N(16)-methylsparteinium iodide with a yield higher than 95%.

The iodide is exchanged by hydroxide using ionic exchange resin, according to the following process: 31.50 g of N(16)-methylsparteinium iodide are dissolved in 92.38 g of water. 85 g of Dowes BR resin are added to the solution and kept with stirring until the next day. Subsequently, it is filtered, washed with distilled water and we obtain 124.36 g of a N(16)-methylsparteinium hydroxide solution with a concentration of 0.65 moles/kg.

### Example 2.

2.08 g of GeO₂ are dissolved in 25.43 g of a N-methylsparteinium hydroxide solution with a concentration of 0.59 moles/1000 g. Once dissolved, 4.16 g of tetraethylorthosilicate are hydrolyzed in said solution, allowing to evaporate with stirring until the ethanol formed evaporates. 0.15 g of ITQ-21 crystals suspended in 1.86 g of water are added. The final composition of the synthesis mixture is:

**0.67 SiO₂ : 0.33 GeO₂ : 0.50 C₁₆H₂₉NOH : 4 H₂O**

It is heated at 175°C in steel autoclaves with an inside Teflon casing for 12 days. The solid obtained after filtering, washing and drying at 100°C is ITQ-21, and the most important lines of its diffraction pattern are shown in table 3.

**TABLE 3**

| 2θ(°) ^{(a)} | Relative intensity |
|---|---|
| 6.42 | VS |
| 9.09 | VW |
| 11.13 | M |
| 12.86 | VW |
| 18.16 | VW |
| 19.27 | W |
| 20.38 | VW |
| 21.34 | W |
| 22.33 | VW |
| 23.23 | VW |
| 24.31 | VW |
| 25.90 | M |
| 26.66 | VW |
| 27.42 | VW |
| 28.20 | VW |
| 28.98 | VW |
| 33.12 | VW |
| 33.81 | VW |

| | |
|---|---|
| ^{(a)} ±0.2 | |

In this table
VS is a very strong relative intensity corresponding to a percentage of 80-100 with respect to the most intense peak,
S is a strong relative intensity, corresponding to a percentage of 60-80 with respect to the most intense peak,
M is a medium relative intensity, corresponding to a percentage of 40-60 with respect to the most intense peak,
W is a relative weak intensity, corresponding to a percentage of 20-40 with respect to the most intense peak,
VW is a very weak relative intensity, corresponding to a percentage of 0-20, with respect to the most intensive peak.

When the material is calcined at 540°C for 3 hours, the most important diffraction lines of the material are the ones that appear in table 4.

**TABLE 4**

| 2θ(°) ^{(a)} | Relative intensity |
|---|---|
| 6.43 | VS |
| 9.10 | W |
| 11.16 | M |
| 12.85 | VW |
| 15.73 | W |
| 16.32 | VW |
| 18.23 | S |
| 19.33 | VS |
| 20.39 | VW |
| 21.41 | VS |
| 22.38 | VW |
| 23.34 | VW |
| 24.99 | W |
| 25.84 | VS |
| 26.62 | M |
| 27.43 | VW |
| 28.25 | W |
| 28.97 | W |
| 29.71 | VW |
| 30.45 | VW |
| 31.57 | VW |
| 33.79 | W |

| | |
|---|---|
| ^{(a)} ±0.2 | |

### Example 3:

5.21 g of tetraethylorthosilicate are hydrolyzed in 25.43 g of N-methylsparteinium hydroxide solution with a concentration of 0.59 moles/1000 g, wherein 0.54 g of GeO₂ have been previously dissolved. The mixture is allowed to evaporate with stirring until the ethanol formed is eliminated. 0.10 g of ITQ-21 crystals suspended in 2.05 g of water are added. The final composition of the mixture is:

**0.83 SiO₂ : 0.17 GeO₂ : 0.50 C₁₆H₂₉NOH : 4 H₂O**

It is heated at 175°C in steel autoclaves with an inside Teflon casing for 13 days. The solid obtained after filtering, washing and drying at 100°C is ITQ-21 with amorphous material.

### Example 4:

0.33 g of GeO₂ are dissolved in 27.95 g of a N-methylsparteinium hydroxide solution with a concentration of 0.59 moles/1000 g. Once dissolved, 6.25 g. of tetraethylorthosilicate are hydrolyzed in said solution, allowing it to evaporate with stirring until the ethanol formed evaporates. 0.15 g of ITQ-21 crystals suspended in 1.86 g of water are added. The final composition is:

**0.91 SiO₂ : 0.09 GeO₂ : 0.50 C₁₆H₂₉NOH : 4 H₂O**

The mixture is heated at 175°C in steel autoclaves with an inside Teflon casing for 24 days. The product obtained is ITQ-21 with amorphous material.

### Example 5:

0.245 g of aluminum isopropoxide and 5.213 g of tetraethylorthosilicate are hydrolyzed in 26.576 g of a N-methylsparteinium hydroxide solution with a concentration of 0.564 moles/1000 g, wherein 0.528 g of GeO₂ have been previously dissolved. The mixture is allowed to evaporate with stirring until the ethanol is eliminated and the isopropanol formed in the hydrolysis. 0.10 g of ITQ-21 crystals suspended in 2.05 g of water are added. The final composition of the mixture is:

**0.83SiO₂ : 0.17 GeO₂ : 0.02 Al₂O₃ : 0.50 C₁₆H₂₉NOH : 6 H₂O**

It is heated at 175°C in steel autoclaves with an inside Teflon casing for 13 days. The product obtained after filtering, washing and drying at 100°C is Al-ITQ-21 with amorphous material.

## Claims

1. A process to synthesise a porous crystalline material that, in a calcined state has a composition
X₂O₃ : n YO_{2 :} m ZO₂
wherein X is a trivalent element, Z is Ge, Y is at least one tetravalent element other than Ge, **characterized in that** the chemical composition (n + m) is at least 5, and the Y/Z ratio is at least 1, and the material, in its calcined form, has an X-ray diffraction pattern substantially coinciding with
| 2θ(°) ^{(a)} | Relative intensity |
|---|---|
| 6.4 | VS |
| 11.2 | M |
| 18.4 | W |
| 19.6 | W |
| 21.6 | M |
| 26.3 | M |
| 29.3 | W |
wherein
VS is a very strong relative intensity corresponding to a percentage of 80-100 with respect to the most intense peak;
M is a medium relative intensity, corresponding to a percentage of 40-60 with respect to the most intense peak, and
W is a weak relative intensity, corresponding to a percentage of 20-40 of the most intense peak,
said process comprising:
- a synthesis step taking place in a basic medium in the absence of added fluoride wherein a synthesis mixture that comprises a source of the trivalent material X, H₂O, a source of the tetravalent material Y, a source of the tetravalent material Z and a structure directing agent (R), whose synthesis mixture has a composition, in terms of molar ratios of oxides of
| | |
|---|---|
| (YO₂+ZO₂)/X₂O₃ | higher than 5 |
| H₂O/(YO₂+ZO₂) | 1-50 |
| R/(YO₂+ZO₂) | 0.1-3.0 |
| OH⁻/(YO₂+ZO₂) | 0.1-3.0 |
| YO₂+ZO₂ | higher than 1 |
is subjected to reaction at a temperature between 80 and 200°C until crystals of the synthesized material are obtained;
- a recovery step wherein the crystals of the synthesized material are recovered; and
- a calcination step, wherein the crystals of the synthesized material that have been recovered are calcined.

2. A process according to claim 1, **characterized in that** it comprises an elimination step, wherein organic material occluded inside the recovered material, is eliminated through an elimination method, selected among an extraction method, thermal treatments at temperatures higher than 250°C for a period of time comprised between 2 minutes and 25 hours, and combinations thereof.

3. A process according to any of the claims 1 and 2, **characterized in that** the mixture has a composition, in terms of molar ratio of
| | |
|---|---|
| (YO₂+ZO₂) /X₃O₃) | higher than 7 |
| H₂O/ (YO₂+ZO₂) | 2-30 |
| R/ (YO₂+ZO₂) | 0.1-1.0 |
| OH⁻/ (YO₂+ZO₂) | 0.1-1.0 |
| YO₂+ZO₂ | higher than 2. |

4. A process according to one of claims 1 to 3, **characterized in that** R is a salt of N(16)-methylsparteinium.

5. A process according to one of claims 1 to 4, **characterized in that** R is a salt of N(16)-methylsparteinium.

6. A process according to any of the claims 1 to 3, wherein Y is an oxide of the tetravalent material.

7. A process according to any of the claims 1 to 3, wherein Z is an oxide of the tetravalent material.

8. A process according to any of the claims 1 to 7, **characterized in that** the porous crystalline material in its uncalcined form, has an x-ray diffraction pattern substantially coinciding with
| 2θ(°) ^{(a)} | Relative intensity |
|---|---|
| 6.5 | VS |
| 11.5 | M |
| 18.5 | S |
| 19.6 | VS |
| 21.8 | S |
| 26.2 | VS |
| 29.3 | M |
| | |
|---|---|
| ^{(a)} ±0.2 | |
wherein
VS is a very strong relative intensity, corresponding to a percentage of 80-100 with respect to the most intense peak,
S is a strong relative intensity, corresponding to a percentage of 60-80 with respect to the most intense peak,
M is a medium relative intensity, corresponding to a percentage of 40-60 with respect to the most intense peak, and
W is a weak relative intensity, corresponding to a percentage of 20-40 with respect to the most intense peak.

9. A process according to one of claims 1 to 8, **characterized in that**
X is at least a trivalent element selected among Al, B, In, Ga, Fe;
Y is at least a tetravalent element selected among Si, Sn, Ti, V.

10. A process according to one of the claims 1 to 9, **characterized in that** X is B, Al or B+Al and Y is Si.

## Patentansprüche

1. Verfahren zum Synthetisieren eines porösen kristallinen Materials, welches in einem kalzinierten Zustand eine Zusammensetzung aufweist
X₂O₃ : n YO₂:m ZO₂
wobei X ein dreiwertiges Element, Z Ge, Y wenigstens ein anderes vierwertiges Element als Ge ist, **dadurch gekennzeichnet, dass** die chemische Zusammensetzung (n + m) wenigstens 5 beträgt, und dass das Y/Z-Verhältnis wenigstens 1 beträgt, und dass das Material in seiner kalzinierten Form, ein Röntgenbeugungsmuster aufweist, welches im wesentlichen übereinstimmt mit
| 20(°) ^{(a)} | Relative Intensität |
|---|---|
| 6,4 | VS |
| 11,2 | M |
| 18,4 | W |
| 19,6 | W |
| 21,6 | M |
| 26,3 | M |
| 29,3 | W |
| | |
|---|---|
| ^{(a)} ± 0,2 | |
wobei
VS eine sehr starke relative Intensität ist, entsprechend einem Prozentanteil von 80 bis 100 in Bezug auf den intensivsten Peak;
M eine mittlere relative Intensität ist, entsprechend einem Prozentanteil von 40 bis 60 in Bezug auf den intensivsten Peak, und
W eine schwache relative Intensität ist, entsprechend einem Prozentanteil von 20 bis 40 des intensivsten Peak,
wobei das Verfahren umfasst:
einen Syntheseschritt, welcher in einem basischen Medium in Abwesenheit von zugegebenen Flourid stattfindet, wobei eine Synthesemischung, welche eine Quelle aus dem dreiwertigen Material X, H₂O, eine Quelle aus dem vierwertigen Material Y, eine Quelle des dreiwertigen Materials Z und ein strukturrichtendes Mittel (R) umfasst, dessen Synthesemischung eine Zusammensetzung aufweist, im Hinblick auf die Molarverhältnisse der Oxide von
| | |
|---|---|
| (YO₂ + ZO₂) / X₂O₃ | mehr als 5 |
| H₂O / (YO₂ + ZO₂) | 1 - 50 |
| R / (YO₂ + ZO₂) | 0,1 - 3,0 |
| OH⁻ / (YO₂ + ZO₂) | 0,1 - 3,0 |
| YO₂ + ZO₂ | mehr als 1 |
einer Reaktion bei einer Temperatur zwischen 80 und 200°C unterworfen wird, bis die Kristalle des synthetisierten Materials erhalten werden;
- einen Rückgewinnungsschritt, wobei die Kristalle des synthetisierten Materials zurückgewonnen werden; und
- einen Kalzinierschritt, wobei die Kristalle des synthetisierten Materials, welche zurückgewonnen wurden, kalziniert werden.

2. Verfahren nach Anspruch 1, **dadurch gekennzeichnet, dass** es einen Eliminierungsschritt umfasst, wobei organisches Material, welches im Inneren des zurückgewonnenen Materials verschlossen ist, durch ein Eliminierverfahren eliminiert wird, welches gewählt ist aus einem Extraktionsverfahren, thermischen Behandlungen bei Temperaturen von mehr als 250°C für einen Zeitraum umfassend zwischen 2 Minuten und 20 Stunden und deren Kombinationen.

3. Verfahren nach einem der Ansprüche 1 und 2, **dadurch gekennzeichnet, dass** die Mischung eine Zusammensetzung aufweist, im Hinblick auf das Molarverhältnis von
| | |
|---|---|
| (YO₂ + ZO₂) / X₂O₃ | mehr als 7 |
| H₂O / (YO₂ + ZO₂) | 2 - 30 |
| R / (YO₂ + ZO₂) | 0,1-1,0 |
| OH⁻ / (YO₂ + ZO₂) | 0,1-1,0 |
| YO₂ + ZO₂ | mehr als 2 |

4. Verfahren nach einem der Ansprüche 1 bis 3, **dadurch gekennzeichnet, dass** R ein Salz von N (16) - Methylsparteinium ist.

5. Verfahren nach einem der Ansprüche 1 bis 4, **dadurch gekennzeichnet, dass** R ein Salz von N (16) - Methylsparteinium ist.

6. Verfahren nach einem der Ansprüche 1 bis 3, wobei Y ein Oxid des vierwertigen Materials ist.

7. Verfahren nach einem der Ansprüche 1 bis 3, wobei Z ein Oxid des vierwertigen Materials ist.

8. Verfahren nach einem der Ansprüche 1 bis 7, **dadurch gekennzeichnet, dass** das poröse kristalline Material in seiner unkalzinierten Form ein Röntgenbeugungsmuster aufweist, welches im wesentlichen übereinstimmt mit
| 20 (°) ^{(a)} | Relative Intensität |
|---|---|
| 6,5 | VS |
| 11,5 | M |
| 18,5 | S |
| 19,6 | VS |
| 21,8 | S |
| 26,2 | VS |
| 29,3 | M |
| | |
|---|---|
| ^{(a)} ± 0,2 | |
wobei
VS eine sehr starke relative Intensität ist, entsprechend einem Prozentanteil von 80 bis 100 in Bezug auf den intensivsten Peak,
S eine starke relative Intensität ist, entsprechend einem Prozentanteil von 60 bis 80 in Bezug auf den intensivsten Peak,
M eine mittlere relative Intensität ist, entsprechend einem Prozentanteil von 40 bis 60 in Bezug auf den intensivsten Peak, und
W eine schwache relative Intensität ist, entsprechend einem Prozentanteil von 20 bis 40 des intensivsten Peak,

9. Verfahren nach einem der Ansprüche 1 bis 8, **dadurch gekennzeichnet, dass**
X wenigstens ein dreiwertiges Element ist, gewählt aus Al, B, In, Ga, Fe;
Y wenigstens ein vierwertiges Element ist, gewählt aus Si, Sn, Ti , V.

10. Verfahren nach einem der Ansprüche 1 bis 9, **dadurch gekennzeichnet, dass** X B, Al oder B+Al und Y Si ist.

## Revendications

1. Procédé permettant de synthétiser un matériau poreux cristallin qui, à l'état calciné, présente une composition
X₂O₃ : n YO₂ : m ZO₂
dans laquelle X est un élément trivalent, Z est Ge, Y est au moins un élément tétravalent autre que Ge, **caractérisé en ce que** la composition chimique (n + m) vaut au moins 5, **en ce que** le rapport Y/Z vaut au moins 1, et **en ce que** le matériau, sous sa forme calcinée, a un diagramme de diffraction coïncidant substantiellement avec
| 2θ(°) ^{(a)} | Intensité relative |
|---|---|
| 6,4 | TF |
| 11,2 | M |
| 18,4 | Fa |
| 19,6 | Fa |
| 21,6 | M |
| 26,3 | M |
| 29,3 | Fa |
| | |
|---|---|
| ^{(a)} ± 0,2 | |
dans lequel
TF est une intensité relative très forte correspondant à un pourcentage de 80-100 par rapport au pic le plus intense,
M est une intensité relative moyenne, correspondant à un pourcentage de 40-60 par rapport au pic le plus intense, et
Fa est une intensité relative faible, correspondant à un pourcentage de 20-40 du pic le plus intense,
ledit procédé comprend:
- une étape de synthèse ayant lieu dans un milieu basique en l'absence de fluorure ajouté dans laquelle un mélange synthétique qui comprend une source du matériau trivalent X, H₂O, une source du matériau tétravalent Y, une source du matériau tétravalent Z et un agent d'orientation de structure (R), ledit mélange synthétique ayant une composition, en termes de rapports molaires d'oxydes de
| | |
|---|---|
| (YO₂ + ZO₂) / X₂O₃ | supérieur à 5 |
| H₂O / (YO₂ + ZO₂) | 1-50 |
| R / (YO₂ + ZO₂) | 0,1-3,0 |
| OH⁻ / (YO₂ + ZO₂) | 0,1-3,0 |
| YO₂ + ZO₂ | supérieur à 1 |
est soumis à une réaction à une température comprise entre 80 et 200 °C jusqu'à ce que des cristaux du matériau synthétisé soient obtenus ;
- une étape de récupération dans laquelle les cristaux du matériau synthétisé sont récupérés ; et
- une étape de calcination, dans laquelle les cristaux du matériau synthétisé qui ont été récupérés sont calcinés.

2. Procédé selon la revendication 1, **caractérisé en ce qu'**il comprend une étape d'élimination, dans laquelle le matériau organique renfermé à l'intérieur du matériau récupéré est éliminé par le biais d'un procédé d'élimination, choisi parmi un procédé d'extraction, des traitements thermiques à des températures supérieures à 250 °C pendant une période de temps comprise entre 2 minutes et 25 heures, et des combinaisons de ceux-ci.

3. Procédé selon l'une quelconque des revendications 1 et 2, **caractérisé en ce que** le mélange a une composition, en terme de rapports molaires, de
| | |
|---|---|
| (YO₂ + ZO₂) / X₂O₃ | supérieur à 7 |
| H₂O / (YO₂ + ZO₂) | 2-30 |
| R / (YO₂ + ZO₂) | 0,1-1,0 |
| OH⁻ / (YO₂ + ZO₂) | 0,1-1,0 |
| YO₂ + ZO₂ | supérieur à 2 |

4. Procédé selon l'une quelconque des revendications 1 à 3, **caractérisé en ce que** R est un sel de N(16)-méthylspartéinium.

5. Procédé selon l'une quelconque des revendications 1 à 4, **caractérisé en ce que** R est un sel de N(16)-méthylspartéinium.

6. Procédé selon l'une quelconque des revendications 1 à 3, dans lequel Y est un oxyde du matériau tétravalent.

7. Procédé selon l'une quelconque des revendications 1 à 3, dans lequel Z est un oxyde du matériau tétravalent.

8. Procédé selon l'une quelconque des revendications 1 à 7, dans lequel le matériau poreux cristallin, sous sa forme calcinée, a un diagramme de diffraction de rayons X coïncidant substantiellement avec
| 2θ(°) ^{(a)} | Intensité relative |
|---|---|
| 6,5 | TF |
| 11, 5 | M |
| 18,5 | F |
| 19,6 | TF |
| 21,8 | F |
| 26,2 | TF |
| 29,3 | M |
| | |
|---|---|
| ^{(a)} ± 0,2 | |
dans lequel
TF est une intensité relative très forte correspondant à un pourcentage de 80-100 par rapport au pic le plus intense,
F est une intensité relative forte, correspondant à un pourcentage de 60-80 par rapport au pic le plus intense, et
M est une intensité relative moyenne, correspondant à un pourcentage de 40-60 du pic le plus intense, et
Fa est une intensité relative faible, correspondant à un pourcentage de 20-40 par rapport au pic le plus intense.

9. Procédé selon l'une quelconque des revendications 1 à 8, **caractérisé en ce que**
X est au moins un élément trivalent choisi parmi Al, B, In, Ga, Fe ;
Y est au moins un élément tétravalent choisi parmi Si, Sn, Ti, V.

10. Procédé selon l'une quelconque des revendications 1 à 9, **caractérisé en ce que** X est B, Al ou B+Al et Y est Si.
